# EUROPEAN PATENT APPLICATION

(11) **EP 2 088 316 A2**
(43) Date of publication of application: **12.08.2009**
(21) Application number: 09150838.2
(22) Date of filing: 19.01.2009
(51) Int. Cl.: F03D 11/02

(54) **Wind turbine comprising a thermal management system**

(30) Priority: 08.02.2008 US 28445
(71) Applicant: General Electric Company, Schenectady, NY 12345 (US)
(72) Inventor: Bagepalli, Bharat S., Niskayuna, NY 12309 (US); Feree, Andrew T., Latham, NY 12110 (US)
(74) Representative: Bedford, Grant Richard

(57) **Abstract**

A thermal management system and wind turbine (100) are provided comprising a gearbox (136) containing a lubrication medium and a pump (310) for circulating the lubrication medium. A gearbox lubrication suction pipe (410, 910) is used for transporting the lubrication medium from the gearbox (136) to the pump (310). At least one pump outlet pipe (350) can be used for transporting the lubrication medium from the pump (310) to other components of the wind turbine. A thermal wrap (420, 520, 720, 820, 920) is in thermal connection to, at least a portion of, at least one of, the gearbox (136), pump (310), gearbox lubrication suction pipe (410, 910) and pump outlet pipe (350). The thermal wrap (420, 520, 720, 820, 920) is used to heat or cool, at least a portion of, the lubrication medium.

## Description

This invention relates generally to rotary machines and more particularly, to a thermal management system for operating wind turbines in cold weather environments.

Generally, a wind turbine includes a rotor having multiple blades. The blades are attached to a rotatable hub, and the blades and hub are often called the rotor. The rotor transforms mechanical wind energy into a mechanical rotational torque that drives one or more generators. The generators are generally, but not always, rotationally coupled to the rotor through a gearbox. The gearbox steps up the inherently low rotational speed of the turbine rotor for the generator to efficiently convert the rotational mechanical energy to electrical energy, which is fed into a utility grid. Gearless direct drive wind turbine generators also exist. The rotor, generator, gearbox and other components are typically mounted within a housing, or nacelle, that is positioned on top of a base that may be a truss or tubular tower.

The gearboxes need to be lubricated to function effectively. Typically, oils are used for lubrication, and the oil assists in the extraction of heat generated in a gearbox. The oil heats up during operation of the gearbox, and a heat exchanger can be used to cool the oil. A suction pipe typically exits the gearbox and feeds into a circulating pump. The circulating pump is used to force the oil through the heat exchanger, and the cooled oil is then directed back to the gearbox. Typically, gearboxes contain a sump in which the oil resides. Dry sump gearboxes utilize an external oil tank instead of an internal one (e.g., wet sump). Dry sump machines can offer better efficiencies (due to reduced churning losses in the oil) and their light weight.

In extremely cold environments (e.g., less than about -10 degrees C), the lubrication oil used in the gearbox can become very viscous or thick. This cold and viscous oil resists flow and the circulating pump can be damaged if run when the oil is very cold.

In some known solutions an external heater and pump are connected to the oil sump of the gearbox. This oil sump heater takes a long time to heat up all the oil in the gearbox sump and requires a large amount of energy. The result is a long delay during cold weather operation, waiting for the oil to come up to a minimum temperature, until the wind turbine can begin producing power, as well as lower overall efficiency due to the large power drain imposed by the oil sump pump/heater.

Accordingly, a need exists in the art for a system that will quickly heat or cool the oil entering a circulating pump used with a gearbox, and that does not require a large amount of power or time to operate.

In one aspect of the present invention a wind turbine is provided comprising a gearbox containing a lubrication medium and a pump for circulating the lubrication medium. A gearbox lubrication suction pipe is used for transporting the lubrication medium from the gearbox to the pump. At least one pump outlet pipe can be used for transporting the lubrication medium from the pump to other components of the wind turbine. A thermal wrap is in thermal connection to, at least a portion of, at least one of, the gearbox, pump, gearbox lubrication suction pipe and pump outlet pipe. The thermal wrap is used to heat or cool, at least a portion of, the lubrication medium.

In another aspect, a wind turbine is provided comprising a gearbox containing a lubrication medium, and having an internal or external oil sump. A pump is used for circulating the lubrication medium, and a gearbox lubrication suction pipe is used for transporting the lubrication medium from the gearbox to the pump. At least one pump outlet pipe can be used for transporting the lubrication medium from the pump to other components of the wind turbine. A thermal wrap can be used for heating or cooling the lubrication medium, and is in thermal connection to, at least one of, the gearbox, pump, gearbox lubrication suction pipe and at least one pump outlet pipe.

In a further aspect, a thermal management system for a lubrication medium used in a gearbox is provided. The system comprises a pump for circulating the lubrication medium, and a suction pipe connected between the gearbox and the pump, for transporting the lubrication medium from the gearbox to the pump. At least one pump outlet pipe can be used for transporting the lubrication medium from the pump. A thermal transfer means can be used for heating or cooling a portion of the lubrication medium. The thermal transfer means is in thermal connection to, at least a portion of, at least one of, the gearbox, pump, suction pipe and pump outlet pipe.

Various aspects and embodiments of the present invention will now be described in connection with the accompanying drawings, in which:
Figure 1 is a schematic illustration of an exemplary wind turbine generator;
Figure 2 is a fragmentary cross-sectional schematic illustration of a nacelle that may be used with the exemplary wind turbine generator shown in Figure 1;
Figure 3 is a block diagram illustration of a prior art gearbox lubrication heating system;
Figure 4 is a block diagram illustration of the thermal management system according to one embodiment of the present invention;
Figure 5 is a block diagram illustration of the thermal management system according to another embodiment of the present invention;
Figure 6 is a block diagram illustration of the thermal management system according to yet another embodiment of the present invention;
Figure 7 is a block diagram illustration of the thermal management system according to yet another embodiment of the present invention;
Figure 8 is a block diagram illustration of the thermal management system according to a still further embodiment of the present invention;
Figure 9 is a block diagram illustration of the thermal management system according to yet another embodiment of the present invention.

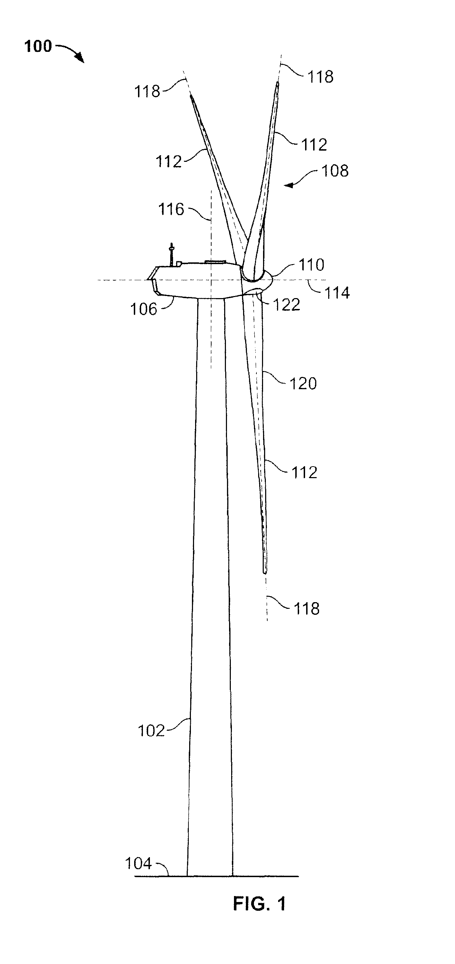

Figure 1 is a schematic illustration of an exemplary wind turbine 100. In the exemplary embodiment, wind turbine 100 is a horizontal axis wind turbine. Alternatively, wind turbine 100 may be a vertical axis wind turbine. Wind turbine 100 has a tower 102 extending from a supporting surface 104, a nacelle 106 mounted on tower 102, and a rotor 108 coupled to nacelle 106. Rotor 108 has a rotatable hub 110 and a plurality of rotor blades 112 coupled to hub 110. In the exemplary embodiment, rotor 108 has three rotor blades 112. In an alternative embodiment, rotor 108 may have more or less than three rotor blades 112. In the exemplary embodiment, tower 102 is fabricated from tubular steel and has a cavity (not shown in Figure 1) extending between supporting surface 104 and nacelle 106. In an alternate embodiment, tower 102 is a lattice tower. The height of tower 102 is selected based upon factors and conditions known in the art.

Blades 112 are positioned about rotor hub 110 to facilitate rotating rotor 108 to transfer kinetic energy from the wind into usable mechanical energy, and subsequently, into electrical energy. Blades 112 are mated to hub 110 by coupling a blade root portion 120 to hub 110 at a plurality of load transfer regions 122. Load transfer regions 122 have a hub load transfer region and a blade load transfer region (both not shown in Figure 1). Loads induced in blades 112 are transferred to hub 110 via load transfer regions 122.

In the exemplary embodiment, blades 112 have a length between about 50 meters (m) (164 feet (ft)) and about 100 m (328 ft). Alternatively, blades 112 may have any length. As the wind strikes blades 112, rotor 108 is rotated about rotation axis 114. As blades 112 are rotated and subjected to centrifugal forces, blades 112 are subjected to various bending moments and other operational stresses. As such, blades 112 may deflect and/or rotate from a neutral, or non-deflected, position to a deflected position and associated stresses, or loads, may be induced in blades 112. Moreover, a pitch angle of blades 112, i.e., the angle that determines blades 112 perspective with respect to the direction of the wind, may be changed by a pitch adjustment mechanism (not shown in Figure 1) to facilitate increasing or decreasing blade 112 speed by adjusting the surface area of blades 112 exposed to the wind force vectors. Pitch axes 118 for blades 112 are illustrated. In the exemplary embodiment, the pitches of blades 112 are controlled individually. Alternatively, the pitches of blades 112 may be controlled as a group.

In some configurations, one or more microcontrollers in a control system (not shown in Figure 1) are used for overall system monitoring and control including pitch and rotor speed regulation, yaw drive and yaw brake application, and fault monitoring. Alternatively, distributed or centralized control architectures are used in alternate embodiments of wind turbine 100.

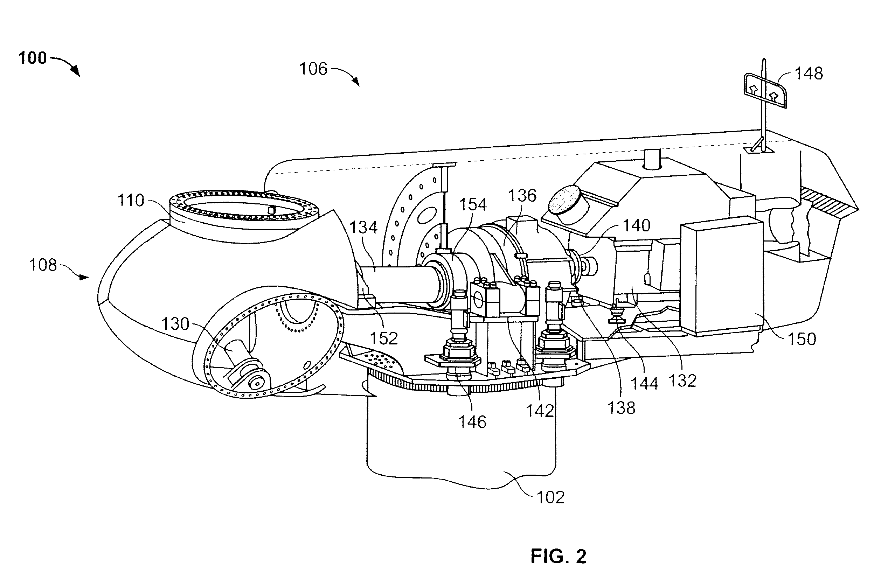

Figure 2 is a fragmentary cross-sectional schematic view of nacelle 106 of exemplary wind turbine 100. Various components of wind turbine 100 are housed in nacelle 106 atop tower 102 of wind turbine 100. Pitch drive mechanisms 130 (only one illustrated in Figure 2) modulates the pitch of blades 112 along pitch axis 118 (both shown in Figure 1).

Rotor 108 is rotatably coupled to an electric generator 132 positioned within nacelle 106 via rotor shaft 134, sometimes referred to as low speed shaft 134, a gearbox 136, a high speed shaft 138, and a coupling 140. Forward and aft support bearings 152 and 154, respectively, are positioned within and are supported by nacelle 106. Bearings 152 and 154 facilitate radial support and alignment of shaft 134. Rotation of shaft 134 rotatably drives gearbox 136 that subsequently rotatably drives shaft 138. Typically, a lubricating oil is used within gearbox 136. Shaft 138 rotatably drives generator 132 via coupling 140 and shaft 138 rotation facilitates generator 132 production of electrical power. Gearbox 136 and generator 132 are supported by supports 142 and 144, respectively. In the exemplary embodiment, gearbox 136 utilizes a dual path geometry to drive high speed shaft 138. Alternatively, main rotor shaft 134 is coupled directly to generator 132 via coupling 140.

Also positioned in nacelle 106 is a yaw adjustment mechanism 146 that may be used to rotate nacelle 106 and rotor 108 on axis 116 (shown in Figure 1) to control the perspective of blades 112 with respect to the direction of the wind. Mechanism 146 is coupled to nacelle 106. Meteorological mast 148 includes a wind vane and anemometer (neither shown in Figure 2). Mast 148 is positioned on nacelle 106 and provides information to the turbine control system that may include wind direction and/or wind speed. In alternative embodiments, mast 148 can be mounted on hub 110 and extend in a direction in front of rotor 108.

A portion of the turbine control system resides within control panel 150. The turbine control system (TCS) controls and monitors various systems and components of wind turbine 100. A plurality of sensors are distributed throughout wind turbine 100 and the status of various conditions (e.g., vibration level, temperature, etc.) are monitored. The sensed conditions are utilized by the TCS to control various subsystems of wind turbine 100. In one example, the ambient temperature or temperature of the oil in the gearbox sump can be sensed and compared to a lower threshold value. If the temperature of either or both of these values is below the threshold, a heater could be activated to warm the gearbox oil to above the threshold value. When a higher predetermined value (e.g., minimum recommended operating temperature of gearbox lubricating oil) is reached the heater may be de-activated.

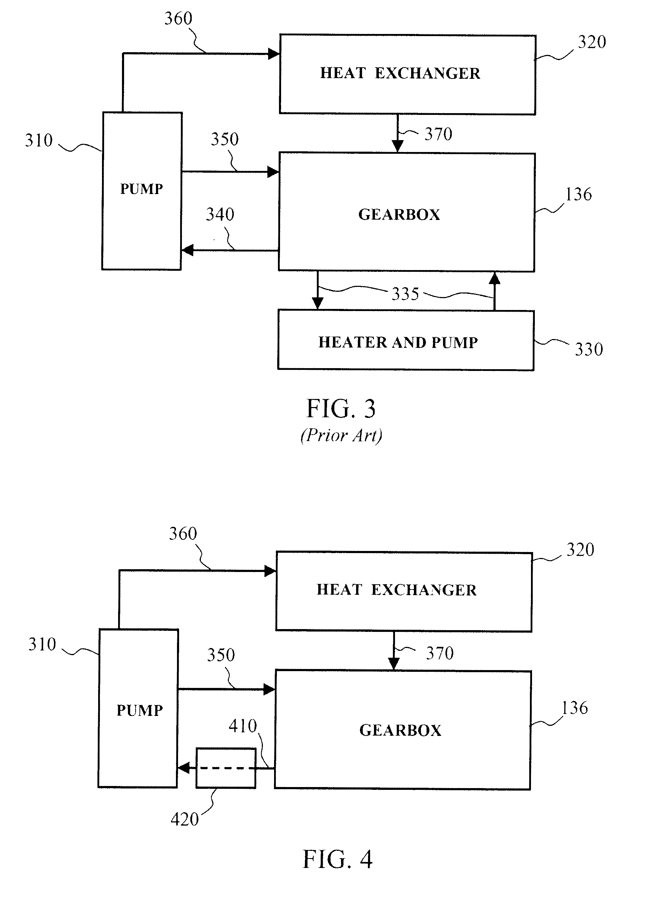

Gearboxes typically need lubrication to function effectively. This lubrication is often in the form of an oil. When oil is warm, it flows readily and is non-viscous, but when oil is cold it becomes viscous and resists flow. Referring to Fig. 3, many known gearboxes use a circulating pump 310 to circulate warm or hot oil through a heat exchanger 320. The heat exchanger is used to cool lubricating oil, and then returns the cooled oil back to the gearbox 136.

In cold weather operation (e.g., less than about -10 degrees C), the lubricating oil used in the gearbox becomes very viscous. The circulating pumps 310 used in conjunction with gearboxes can be damaged by the viscous oil. For example, the vanes of the pump could break when forced to pump viscous fluids (e.g., lubricating oils). The term "cold" is somewhat relative and refers to a temperature when a lubricating medium becomes viscous. For example, some lubricating oils may become viscous at about +10 degrees C. The present invention can be used at any temperature and/or in any application where a viscous lubricating medium needs to be heated to become less viscous.

In some known solutions to this problem, and as illustrated in Fig. 3, an external heater and pump 330 is connected to the oil sump of gearbox 136. Typically, two pipes 335 are connected between the heater and pump 330 and the oil sump of gearbox 136. One pipe 335 transfers oil from the gearbox to the heater and pump 330, and the other pipe 335 returns warmed oil back to the oil sump of gearbox 136.

Once the oil in gearbox 136 has warmed to a minimum operating temperature, pump 310 can be energized and transfer oil out of gearbox 136 via suction pipe 340. Pump 310 can include an internal valve (not shown) for selectively discharging oil into gearbox return pipe 350 or into heat exchanger input pipe 360. Typically, when the oil in gearbox heats up enough to require cooling by heat exchanger 320, it is normally returned to gearbox 136 via pipe 370. In alternative embodiments, the oil may pass through pump 310 before returning to gearbox 136.

Given enough time and power the system illustrated in Fig. 3 does work, although it takes a long time to heat all the oil in the oil sump to a minimum operating temperature. A large amount of power is also required during this process. The disadvantages to this approach include the large amount of power required to operate the heater and pump 330, the capital cost of the heater and pump 330 components, the long time period required to heat the oil and the lost income from waiting to operate the machinery (e.g., a wind turbine). This last factor can have a large impact in wind farms that may comprise hundreds of wind turbines. Every minute lost in generating power adds up to a substantial monetary amount when factored over the course of a year and multiplied by the number of turbines in a typical wind farm.

Fig. 4 illustrates one embodiment of the present invention that reduces the time required to start operating a wind turbine in cold environments. The weakest link in the system shown in Fig. 4 is the pump 310. This pump 310 is the most likely element to fail in cold weather environments. The cause of this failure is most often associated with viscous oil or lubricant. The viscous oil causes the vanes (or other parts) of pump 310 to break. The solution, as embodied by aspects of the present invention, is to heat up the oil just before it enters pump 310. There is no need to heat up all the oil in the gearbox 136 first. The oil located in oil sump outlet pipe 410 consists of a small amount of oil and a low thermal mass, when compared to the total oil capacity of the oil contained in gearbox 136. In alternative embodiments, oil sump outlet pipe 410 could be located at any point on the gearbox 136, as long as a supply of oil can be transferred to pump 310.

A thermal wrap 420 can be placed around pipe 410, and this wrap 420 can be used to heat the oil contained within pipe 410. The thermal wrap 420 can be a blanket like device having electrically heated wires or cables, a hot air jacket or heat transfer device. The thermal wrap 420 could also be embedded within the walls of pipe 410 (e.g., electrically powered heating wires within the pipe wall). A portion or the entirety of pipe 410 can be covered with the thermal wrap 420. The thermal wrap 420 can be attached to pipe 410 with any suitable fasteners (e.g., hook and loop, cable ties, magnets, etc.). Power can be supplied via a standard electrical plug (not shown) and the wrap 420 can be configured to run on AC or DC power.

One major advantage to this system is that only a small amount of power is needed to power thermal wrap 420. Another advantage is that since only a small amount of oil is heated (i.e., only the oil contained within pipe 410) the resulting low thermal mass of oil heats up very quickly. The pump 310 is constantly fed a supply of warm oil and can begin operation much faster than in the system shown in Fig. 3. Another advantage is that the wind turbine can begin to operate sooner, thereby the oil present in gearbox 136 will begin to heat up via frictional forces and aid in the oil warming process.

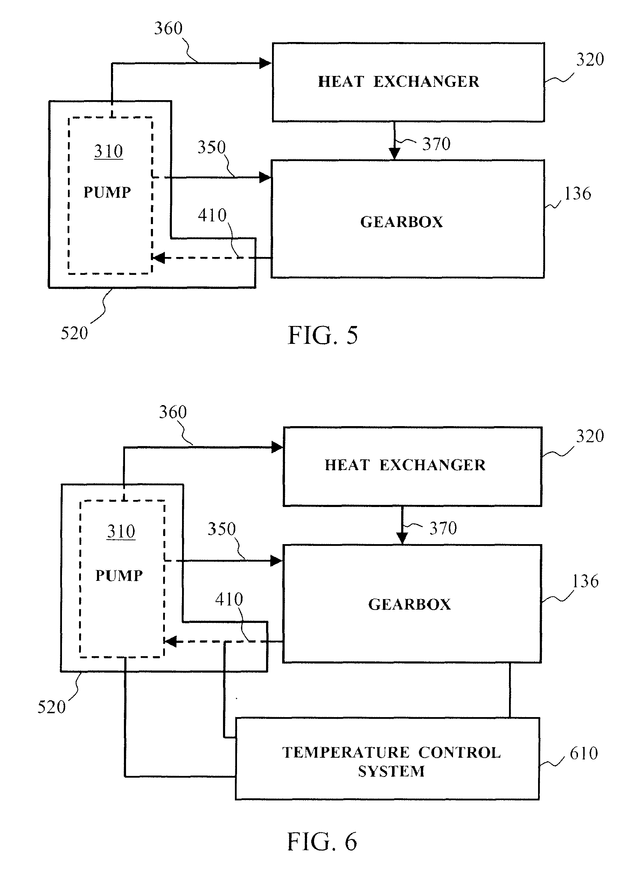

Fig. 5 illustrates another embodiment of the present invention. Thermal wrap 520 covers pump 310 and pipe 410. In alternative embodiments, the thermal wrap 520 may cover all or a portion of pump 310 and/or all or a portion of pipe 410. The thermal wrap may comprise a single piece or may comprise two or more individual pieces that can be used to cover all or portions of pump 310 and/or pipe 410. The thermal wrap 520 could also be extended to cover all or a portion of pump outlet pipe 350. Heating the oil exiting the pump 310 and entering gearbox 136 via pipe 350 could benefit the pump by reducing the pushing resistance experienced by the pump.

In alternative embodiments the thermal wrap could be configured to cover all or a portion of gearbox 136. In one embodiment, only the lower portion of the gearbox could be heated, and in other embodiments the entire gearbox, or portions of the gearbox could be heated by one or more thermal wraps. It is also contemplated by aspects of the present invention that one or more wraps could be used to cover and heat, all or portions of, the gearbox 136, outlet pipe 410, pump 310, inlet pipe 350 and pipe 360.

As described above in conjunction with Fig. 4, thermal wrap 520 can be comprised of a blanket like device having electrically heated wires or cables, a hot air jacket or heat transfer device. The thermal wrap 520 could also be embedded within the walls of pipe 410 (e.g., electrically powered heating wires within the pipe wall) and/or the casing of pump 310. A portion of or the entirety of pipe 410 and/or pump 310 can be covered with the thermal wrap 520. The thermal wrap 520 can be attached to pipe 410 and/or pump 310 with any suitable fasteners (e.g., hook and loop, cable ties, magnets, etc.). Power can be supplied via a standard electrical plug (not shown) and the wrap 520 can be configured to run on AC or DC power.

Referring to Fig. 6, the temperature control system 610 can be utilized to monitor and control the thermal wrap 420, 520. A plurality of temperature monitoring sensors can be used to monitor the temperature of the oil in the gearbox, the temperature of the oil in pipe 410, the temperature of pipe 410, the temperature of the oil in pump 310, the temperature of pump 310 and the ambient temperature. Based on the data received, the temperature control system can determine if the heated wrap should be activated. As one example, if the ambient temperature was about -10 degrees C or less, and the oil temperature in the gearbox sump and/or the oil temperature in the suction pipe 410 was below a predetermined threshold value, then the thermal wrap 420, 520 could be energized. Readings would be monitored at predetermined intervals, and when the oil reached a specific temperature, then the heated wrap could be deactivated. In additional aspects of the present invention, temperature monitoring sensors could also be used to monitor the temperature of the oil contained within or the pipes in various locations, such as pipe 350, pipe 360, pipe 370, heat exchanger 320 and other locations.

In some applications, the pipes or hoses used in a gearbox system are formed of a rubber or elastomeric material, and this rubber material can be damaged by oil that is too hot. It will be understood that the terms "pipe" or "pipes" and "hose" or hoses" are used interchangeably, and the present invention can be applied to any type of pipe or hose used in a machine requiring the lubrication medium to be transported between components. Additional aspects of the present invention can be utilized to monitor the temperature of pipe 410, and if this temperature exceeded or was approaching a maximum recommended temperature (i.e., the oil was making the pipe or hose too hot), then the heated wrap could be deactivated. The temperature control system may also decide to instruct pump 310 to route the oil through heat exchanger 320 to cool the oil. In additional embodiments, the heated wrap itself could contain a self-regulating device that deactivates itself when an over-temperature condition is approaching. The temperature control system 610 could also be controlled by the turbine control system (TCS). In some wind turbines the TCS monitors and controls a variety of subsystems (e.g. pitch motors, yaw drive, power converter, etc.). In additional embodiments, the thermal wrap could be controlled to cool the oil or pipe, if it was determined that an over-temperature condition was occurring or approaching.

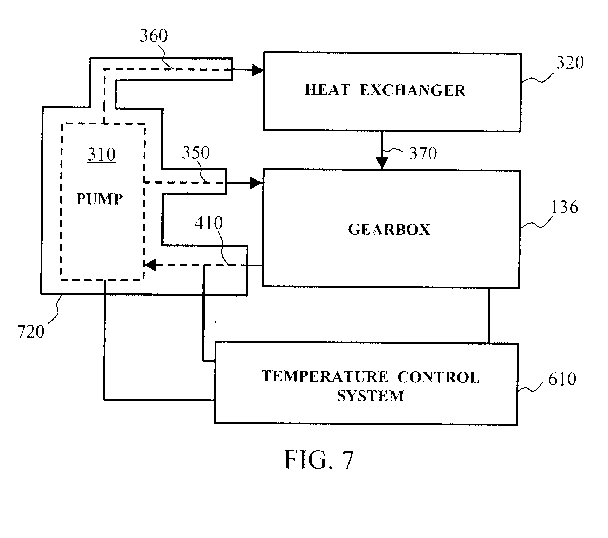

Fig. 7 illustrates another embodiment of the present invention. Thermal wrap 720 can be configured to cover all, or portions of, pump 310, pipes 350, 360 and 410. Thermal wrap 720 could be used for heating and/or cooling. In heating applications, the outlet pipes from pump 310, namely pipes 350 and 360, can be heated to reduce the viscosity of the oil. This will reduce the load on pump 310 and make it easier for pump 310 to "push" oil along pipes 350 and/or 360. In some embodiments pipe 370 could also be covered, either partially or entirely, with a thermal wrap. Gearbox 136 could also be covered, either partially or entirely, with a thermal wrap. In cooling applications, thermal wrap 720 could be used to cool the various components or pipes of wind turbine 100. The wrap 720 could be cooled by a variety of means, including but not limited to heat transfer conduit coupled to a heat exchanging means, conduit coupled to heat exchanger 320, thermo-electric cooling means, peltier cooling, or any other suitable cooling or refrigeration means.

In additional aspects of the present invention, the thermal wraps 420, 520 and/or 720 could comprise heating and/or cooling means. For example, the cooling means could be used if the oil in pipe 410 or pump 310 became too hot. In some applications, it may be possible for oil, over a predetermined temperature, to damage the pipe 410 and/or pump 310. Accordingly, a cooling means integrated with wrap 420, 520 or 720 could be used to cool oil that has become too hot. The cooling means could comprise a length of conduit or tubing that contains a heat transfer medium. The conduit could be connected to an external or internal heat exchanger, or to any other suitable cooling or refrigeration device. In one example embodiment, the conduit used for cooling could be connected to heat exchanger 320, or a thermo-electric cooling device could be employed. The thermal wrap, when placed over all or portions of gearbox 136, could also be used to cool all or portions of the gearbox when properly configured. The gearbox cooling embodiments could be used to augment or replace heat exchanger 320.

The thermal wrap 420, 520 or 720 could be used with gearboxes of the dry sump or wet sump type. A dry sump gearbox has its oil tank external to the gearbox, whereas a wet sump gearbox has at least a portion of its oil tank formed integrally or internally within the gearbox. In a dry sump application, the thermal wrap could be used to cover all or portions of the external oil tank.

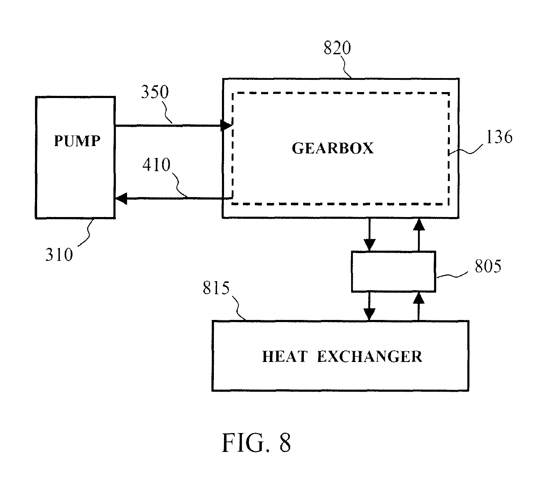

Fig. 8 illustrates another embodiment of the present invention where the thermal wrap 820 can be placed over all, or portions of, the gearbox 136. Alternatively, the thermal wrap could be partially or fully embedded within the wall or casing of the gearbox. In Fig. 8, the thermal wrap 820 could be used for cooling and/or heating.

In one cooling example, a pump or compressor 805 could be used to transfer a refrigerant medium between the wrap 820 and heat exchanger 815. Appropriate pipes or hoses can be arranged between the compressor 805 and the wrap 820, and between compressor 805 and heat exchanger 815 for transporting the refrigerant medium. Any suitable refrigerant medium could be used, including but not limited to, antifreeze, ethylene glycol, glycol mixtures, or any other thermo-dynamic gas or liquid capable of absorbing heat from the desired component to be cooled. The heat exchanger 815 could be located either inside or outside of nacelle 106. The heat exchanger 815 can be used to dissipate heat contained within the refrigerant medium. In some embodiments, heat exchanger 320 (as shown in Figs. 4-7) can be omitted.

The wrap 820 shown in Fig. 8 could also be used for heating gearbox 136 and/or the oil contained therein. In some heating embodiments, the compressor 805 and heat exchanger 815 can be omitted, and a heat exchanger 320 (as shown in Figs. 4-7) can be employed instead. As stated previously, thermal wrap 820 can be placed around all or portions of gearbox 136.

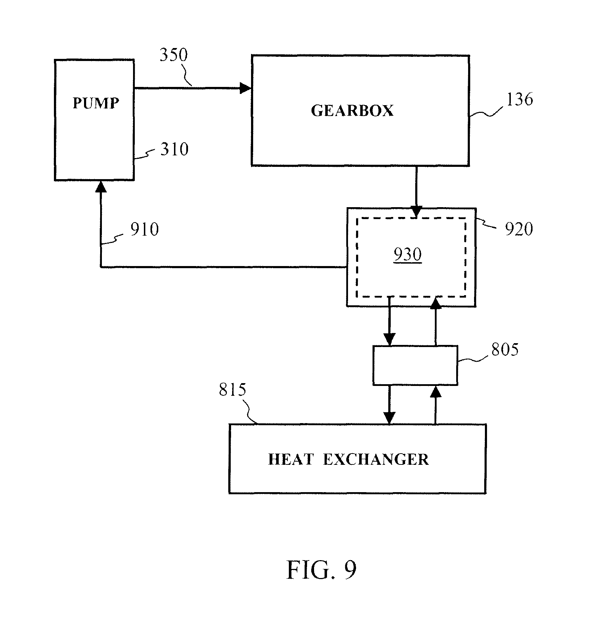

Fig. 9 illustrates a gearbox 136 having an external oil sump tank 930 (shown in phantom). A thermal wrap 920 can be placed around all or portions of oil sump tank 930. In addition, the thermal wrap 920 could be extended to cover all or portions of oil suction pipe 910, pump 310, pump outlet pipe 350 and/or gearbox 136.

In one heating example embodiment, the thermal wrap 920 can be used to heat the lubricant contained within oil sump tank 930. The thermal wrap 920 can be connected via conduit, pipes or hoses to a pump or compressor 805. A heat exchanger can be connected to compressor 805 via similar conduit, pipes or hoses. The compressor 805 and heat exchanger 815 can function in a similar manner as described previously in conjunction with Fig. 8. The heat exchanger could be placed either inside or outside the nacelle 106, and can be located in a thermally efficient location.

In one cooling example embodiment, thermal wrap 920 could be configured to cool the oil within oil sump tank 930. For cooling applications, the compressor 805 and heat exchanger 815 may be omitted, or they could be retained as dictated by the specific application.

In Figs. 4 to 9, the thermal wrap 420, 520, 720, 820 and 920 can be configured for cooling and/or heating, and may comprise a flexible or rigid material. In cooling applications, the thermal wrap may comprise heat transfer conduit coupled to a heat exchanging means, thermo-electric cooling means, peltier cooling, refrigerant circulating system, or any other suitable cooling or refrigeration means. In heating applications, the thermal wrap may comprise a blanket like device having electrical wires or cables which produce heat, a hot air jacket, thermo-electric heating means, peltier heating or heat transfer device. The thermal wrap can be placed over all or portions of selected components, or could also be embedded within the all or portions of the wall or housing of selected components. Additionally, the thermal wrap may be comprised of one or more individual sections, which may be used and controlled as a group or separately.

In some applications, it may be possible to eliminate the use of large heat exchanger 320, by configuring the thermal wrap to cool the lubricant and/or gearbox 136. Alternatively, a smaller heat exchanger 320 could be used and placed in a greater variety of locations due to its reduced size. It could be possible to locate the heat exchanger 320 in a more thermally advantageous position to increase the dissipation of heat. For example, the heat exchanger could be placed in cooler positions within nacelle 106, or located externally to nacelle 106. Another advantage to using a smaller heat exchanger, is that a smaller pump could also be employed due to the lower flow resistance of the smaller heat exchanger.

The various aspects of the present invention herein described provide a system for quickly and efficiently heating or cooling the lubrication medium (e.g., oil) used in gearboxes. The oil is heated or cooled prior to entering the circulating pump and only a small thermal mass of oil is thermally processed (i.e., compared to the entire volume of oil used for gearbox lubrication). The result is a very quick start up time for machines utilizing gearboxes in cold weather environments. Any engine, vehicle or machine requiring a gearbox could employ the invention herein described. One application is in the use of wind turbines, and the present invention enables a quick start-up time during cold weather operation, while reducing the costs and disadvantages of prior solutions. The systems described herein could be applied to dry sump and/or wet sump type gearboxes.

While the invention has been described in terms of various specific embodiments, those skilled in the art will recognize that the invention can be practiced with modification within the spirit and scope of the claims.

Various aspects and embodiments of the present invention are now defined in the following numbered clauses:
1. A wind turbine comprising:
   a gearbox containing a lubrication medium;
   a pump for circulating said lubrication medium;
   a gearbox lubrication suction pipe for transporting said lubrication medium from said gearbox to said pump;
   at least one pump outlet pipe for transporting said lubrication medium from said pump;
   a thermal wrap in thermal connection to, at least a portion of at least one of said gearbox, said pump, said gearbox lubrication suction pipe, and said at least one pump outlet pipe;
   wherein, said thermal wrap is used to heat or cool at least a portion of said lubrication medium.
2. The wind turbine of clause 1, further comprising:
   at least one oil sump tank for use with said gearbox;
   wherein said thermal wrap is in thermal connection to, at least a portion of said at least one oil sump tank.
3. The wind turbine of any preceding clause, wherein said lubrication medium comprises oil.
4. The wind turbine of any preceding clause, further comprising:
   a temperature control system for monitoring the temperature of said gearbox lubrication suction pipe;
   wherein, power supplied to said thermal wrap is controlled if said temperature approaches a level where damage may occur to said gearbox lubrication suction pipe or said pump.
5. The wind turbine of any preceding clause, further comprising:
   a temperature control system for monitoring at least one temperature;
   wherein, said at least one temperature is chosen from the group comprising, at least one of ambient temperature, lubrication medium temperature, and gearbox lubrication suction pipe temperature.
6. The wind turbine of any preceding clause, wherein said thermal wrap comprises a heated blanket, wherein said thermal wrap covers, at least portions of said gearbox lubrication suction pipe and said pump.
7. The wind turbine of any preceding clause, wherein said thermal wrap comprises heating wire, said heating wire embedded within said gearbox lubrication suction pipe.
8. The wind turbine of any preceding clause, wherein said thermal wrap comprises a hot air jacket.
9. The wind turbine of any preceding clause, wherein said thermal wrap comprises thermo-electric heating or cooling means for heating or cooling said lubrication medium.
10. A wind turbine comprising:
   a gearbox containing a lubrication medium, said gearbox comprising an internal or external oil sump;
   a pump for circulating said lubrication medium;
   a gearbox lubrication suction pipe for transporting said lubrication medium from said gearbox to said pump;
   at least one pump outlet pipe for transporting said lubrication medium from said pump;
   a thermal wrap for heating or cooling said lubrication medium;
   wherein, said thermal wrap is in thermal connection to, at least one of:
      said gearbox, said pump, said gearbox lubrication suction pipe
      and said at least one pump outlet pipe.
11. The wind turbine of clause 10, wherein said thermal wrap covers all or portions of, at least one of:
   said gearbox, said pump, said gearbox lubrication suction pipe and said at least one pump outlet pipe.
12. The wind turbine of clause 10 or 11, wherein said wind turbine comprises:
   a temperature control system for monitoring the temperature of at least one of said lubrication medium, ambient temperature and/or said gearbox lubrication suction pipe;
   wherein, said thermal wrap is controlled to heat or cool said lubrication medium if said temperature approaches one or more predetermined temperature levels.
13. The wind turbine of any of clauses 10 to 12, wherein at least one of said predetermined temperature levels corresponds to a temperature of said lubrication medium about which said lubrication medium becomes viscous, and where damage to said pump could occur if said pump attempted to pump viscous lubricating medium.
14. A thermal management system for a lubrication medium used in a gearbox, said gearbox comprising an internal or external oil sump, said thermal management system comprising:
   a pump for circulating said lubrication medium;
   a suction pipe connected between said gearbox and said pump, said suction pipe for transporting said lubrication medium from said gearbox to said pump;
   at least one pump outlet pipe for transporting said lubrication medium from said pump;
   thermal transfer means for heating or cooling at least a portion of said lubrication medium;
   wherein said thermal transfer means is in thermal connection to, at least a portion of at least one of said gearbox, said pump, said suction pipe and said at least one pump outlet pipe.
15. The thermal management system of clause 14, further comprising:
   a temperature monitoring system for monitoring at least one temperature, said at least one temperature chosen from the group comprising at least one of external ambient temperature, lubrication medium temperature, and suction pipe temperature;
   wherein, said thermal management system controls said thermal transfer means when said at least one temperature is equal to, above or below one or more predetermined threshold values.
16. The thermal management system of clause 14 or 15, wherein said thermal transfer means is comprised of a thermal wrap, said thermal wrap comprised of, at least one of:
   a thermo-electric device, a peltier device, electrically conductive wire, a hot or cold air jacket, a refrigeration device, and thermally conductive conduit connected to a heat exchanger.
17. The thermal management system of any of clauses 14 to 16, wherein said thermal transfer means is, at least partially, embedded within, at least one of, said gearbox, said suction pipe, said at least one pump outlet pipe and said sump of said gearbox.
18. The thermal management system of any of clauses 14 to 17, wherein said thermal transfer means externally covers at least portions of, one or more of, said gearbox, said suction pipe, said at least one pump outlet pipe and a oil sump tank of said gearbox.
19. The thermal management system of any of clauses 14 to 18, wherein said thermal transfer means is comprised of one or more thermal wraps.
20. The thermal management system of any of clauses 14 to 19, wherein said thermal transfer means is comprised of two or more thermal wraps.

## Claims

1. A wind turbine (100) comprising:
a gearbox (136) containing a lubrication medium;
a pump (310) for circulating said lubrication medium;
a gearbox lubrication suction pipe (410, 910) for transporting said lubrication medium from said gearbox (136) to said pump (310);
at least one pump outlet pipe (350) for transporting said lubrication medium from said pump;
a thermal wrap (420, 520, 720, 820, 920) in thermal connection to, at least a portion of, at least one of, said gearbox (136), said pump (310), said gearbox lubrication suction pipe (410, 910), and said at least one pump outlet pipe (350);
wherein, said thermal wrap (420, 520, 720, 820, 920) is used to heat or cool, at least a portion of, said lubrication medium.

2. A wind turbine comprising:
a gearbox (136) containing a lubrication medium, said gearbox comprising an internal or external oil sump;
a pump (310) for circulating said lubrication medium;
a gearbox lubrication suction pipe (410, 910) for transporting said lubrication medium from said gearbox (136) to said pump (310);
at least one pump outlet pipe (350) for transporting said lubrication medium from said pump (310);
a thermal wrap (420, 520, 720, 820, 920) for heating or cooling said lubrication medium;
wherein, said thermal wrap (420, 520, 720, 820, 920) is in thermal connection to, at least one of, said gearbox (136), said pump (310), said gearbox lubrication suction pipe (410, 910) and said at least one pump outlet pipe (350).

3. A thermal management system for a lubrication medium used in a gearbox (136), said gearbox comprising an internal or external oil sump, said thermal management system comprising:
a pump (310) for circulating said lubrication medium;
a suction pipe (410, 910) connected between said gearbox (136) and said pump, said suction pipe for transporting said lubrication medium from said gearbox (136) to said pump (310);
at least one pump outlet pipe (350) for transporting said lubrication medium from said pump (310);
thermal transfer means (420, 520, 720, 820, 920) for heating or cooling, at least a portion of, said lubrication medium;
wherein said thermal transfer means (420, 520, 720, 820, 920) is in thermal connection to, at least a portion of, at least one of, said gearbox (136), said pump (310), said suction pipe (410, 910) and said at least one pump outlet pipe (350).

4. The wind turbine or thermal management system of any of the preceding claims, further comprising:
a temperature control system (610) for monitoring the temperature of said gearbox lubrication suction pipe (410, 910);
wherein, power supplied to said thermal wrap (420, 520, 720, 820, 920) is controlled if said temperature approaches a level where damage may occur to said gearbox lubrication suction pipe (410, 910) or said pump (310).

5. The wind turbine or thermal management system of any of the preceding claims, further comprising:
a temperature control system (610) for monitoring at least one temperature;
wherein, said at least one temperature is chosen from the group comprising, at least one of, ambient temperature, lubrication medium temperature, and gearbox lubrication suction pipe temperature.

6. The wind turbine or thermal management system of any of the preceding claims, wherein said thermal wrap or thermal transfer means (420, 520, 720, 820, 920) comprises at least one of, a thermo-electric device, a peltier device, electrically conductive wire, a hot or cold air jacket, thermally conductive conduit connected to a heat exchanger.

7. The wind turbine or thermal management system of any of the preceding claims, wherein said thermal wrap or thermal transfer means (420, 520, 720, 820, 920) is, at least partially, embedded within, at least one of, said gearbox (136), said suction pipe (410, 910), and said at least one pump outlet pipe (350).

8. The wind turbine or thermal management system of any of the preceding claims, wherein said thermal wrap or said thermal transfer means (420, 520, 720, 820, 920) externally covers at least portions of, one or more of, said gearbox (136), said suction pipe (410, 910), and said at least one pump outlet pipe (350).

9. The wind turbine or thermal management system of any of the preceding claims, wherein said thermal wrap or thermal transfer means (420, 520, 720, 820, 920) is comprised of one or more thermal wraps.

10. The wind turbine or thermal management system of any of the preceding claims, wherein said thermal wrap or said thermal transfer means (420, 520, 720, 820, 920) is comprised of two or more thermal wraps.
